# EUROPEAN PATENT SPECIFICATION

(11) **EP 4 221 495 B1**
(45) Date of publication and mention of the grant of the patent: **18.06.2025**
(21) Application number: 21789619.0
(22) Date of filing: 30.09.2021
(51) Int. Cl.: A01K 63/00

(54) **FIBER-REINFORCED PLASTIC MATERIAL AQUACULTURE TANK**
AQUAKULTURTANK AUS FASERVERSTÄRKTEM KUNSTSTOFFMATERIAL
RÉSERVOIR D'AQUACULTURE EN MATIÈRE PLASTIQUE RENFORCÉE PAR DES FIBRES

(30) Priority: 30.09.2020 NO 20201068
(43) Date of publication of application: 09.08.2023
(73) Proprietor: CSUB AS, 4841 Arendal (NO)
(72) Inventor: BRATTEKÅS, Christian, 4841 Arendal (NO); KVÅLE, Joakim, 4810 Eydehavn (NO); JANSON, Vidar, 5518 Haugesund (NO); SEMB, Gunnar, 4817 His (NO); HOLM, Anders, 4844 Arendal (NO)
(74) Representative: Bryn Aarflot AS
(86) International application number: PCT/EP2021/076952
(87) International publication number: WO 2022/069636

(56) References cited:
- JP-A- 2003 265 065
- JP-U- S5 172 210
- US-A- 5 155 961
- US-A1- 2014 283 754
- US-A1- 2019 283 845

## Description

The present invention relates to large aquaculture tanks, such as tanks used for onshore aquaculture, made of fiber-reinforced plastic materials.

### Background Art

In some fields of technology, very large tanks are used for holding large amounts of liquid. One such technology is onshore fish farming. Within this field, often referred to as RAS technology (recirculating aquaculture system), fish is kept in tanks having a diameter of for instance 10 to 30 meters.

Some RAS systems use tanks made of concrete. Concrete is a well-known and proven material but has some disadvantages. For instance, once concrete tanks are built, they are costly to dismount. Furthermore, examples have shown that when filling such large tanks with water, the added weight may result in ground settling that makes the concrete crack. As an illustrational example, the water held by a fully filled square-shaped tank with 20 meter sides and a water depth of 6 meters will weigh 2400 tonnes. Such amounts of mass demand a stable ground.

An alternative is to use tanks made of a fiber-reinforced material, typically GRP or FRP (glass fiber-reinforced plastic / fiber-reinforced plastic). At least in part due to the size of such tanks, such fish tanks are typically installed near the sea. Such a location enables transport of the tanks to the site in one large piece or in separate but large pieces.

Installing GRP or FRP tanks that are remote from the sea, such that ship transport is impossible, can however be problematic with known tanks. The size of such tank pieces is typically restricted to the capability of road trucks.

Another transport issue is the desire to transport such tanks in a compact state, i.e. in a manner where even large tanks can be transported with few and small-sized items. Typically, it would be desirable to transport the tanks in standard containers, of the type that can be carried by road trucks.

Publication US20190283845A1 discloses a modular structure for being at least partially submerged in water. The structure can be used for containing live fish, and is built by joining a plurality of modules into a complete structure.

### Summary of invention

According to the present invention, there is provided a fiber-reinforced plastic material aquaculture tank comprising side walls. The side walls comprise a plurality of horizontally oriented wall beams that are stacked vertically on top of each other. The respective wall beams have a first side plate and an oppositely arranged second side plate. The first and second side plates, respectively, comprise a vertical wall portion, wherein there is a horizontal distance between the vertical wall portions of the first and second side plates, respectively. Furthermore, the first and second plates are made of a fiber-reinforced plastic material. The side plates further comprise connection flanges that extend parallel to the horizontal extension of the wall beams. The connection flanges of the respective two oppositely arranged side plates curve towards each other. The connection flanges comprise bolt apertures and access apertures.

The fiber-reinforced plastic material can typically be GRP (glass-fiber reinforced plastic). However, other fiber-reinforced composite materials can also be used.

With the term aquaculture tank is meant water-holding tanks related to aquaculture, e.g. water-holding tanks with live fish, or tanks used for water treatment. A typical embodiment where the tank can be used for water treatment, is an RAS system (recirculating aquaculture system). In such systems, tanks according to the present invention may for instance be used as a settling tank or water treatment tank.

In some embodiments, the side plates can further comprise attachment flanges that are arranged vertically opposite of the connection flanges and which extend parallel to the horizontal extension of the wall beams. The attachment flanges of the respective two oppositely arranged side plates can curve towards each other.

By having access apertures in addition to the bolt apertures, one is able to access the bolts to connect one wall beam to the previously installed wall beam.

The connection flange and the attachment flange of the respective side plates may extend with a different horizontal extension crosswise to the longitudinal length of the side plates. In such embodiments, one connection flange of one side plate may overlap with a portion of one attachment flange of an opposite and below side plate.

The connection flanges and the attachment flanges can comprise a securing pattern. The securing pattern can transfer forces between the wall beams and between opposite side plates.

The respective side plates can in some embodiments comprise a connection flange and an attachment flange, which each comprises a respective fixation slot that together receives a fixation member. This is one manner of providing forces transfer from one side of the wall beam to the other side.

The connection flanges and/or the attachment flanges can comprise a plurality of protrusions and a plurality of receiving recesses. The protrusions and the recesses can engage, thus providing force transfer between the side plates.

The said horizontal distance can be a first horizontal distance, and the first and second side plates, respectively, can further comprise a vertical attachment portion, wherein there is a second horizontal distance between the outer faces of the vertical attachment portions of the first and second side plates, respectively. The first horizontal distance can be equal to or larger than the second horizontal distance. The vertical attachment portions can be located between the vertical wall portions.

The wall beam may further comprise an attachment plate that is connected to both opposite side plates.

Preferably, the attachment plate can be made of a fiber-reinforced plastic material. Typically, the material can be the same material as in the side plates.

The attachment plate can typically be attached to the side plates with glue, with bolts, or both.

In embodiments where the side plates comprise connection flanges, the attachment plate can advantageously connect to said connection flanges.

The side plates may comprise a landing element arranged on an inner face of the vertical wall portion.

In some embodiments, among the two side plates of one wall beam, the vertical wall portion of the first side plate constitutes an inner wall face of the aquaculture tank, and the vertical wall portion of the second side plate constitutes an inner wall face of an adjacent aquaculture tank.

In some embodiments, where the aquaculture tank is one of several tanks, the attachment plate can comprise three branches extending from an intersection and into separate side walls of adjacent aquaculture tanks. This enhances the mechanical stability of the adjacent tanks.

Advantageously, the aquaculture tank can further comprise a top wall cover that covers the upper face or edge of the side plates. The top wall cover can comprise three branches that extend from a top wall cover intersection and along separate side walls.

The side plates may further comprise an edge that is arranged between a first part of the side plate extending in a first horizontal direction and a second part of the side plate extending in a second horizontal direction, wherein an angle is present between the first and second directions. The angle is above zero degrees and advantageously not larger than 90 degrees. Such side plates are suitable for constructing aquaculture tanks that have a polygonal shape.

Advantageously, one or more side plates can comprise an attachment portion in the form of a recessed step at an end of the side plate. The recessed step can overlap with and connect to an end of an adjacent side plate. In this manner, several side plates can be attached together into longer sections of side plates. In turn, such longer section of side plates can be part of long wall beams.

The aquaculture tank may comprise three or more wall beams that comprises an attachment plate, wherein the attachment plates have different thickness, and wherein the lower-most attachment plate is thicker than the upper-most attachment plate. In this manner, weight and material is saved, as the strength of the upper attachment plates need not be as strong as the lower attachment plates.

In some embodiments, the aquaculture tank can comprise an attachment plate that connects the first side plate to the second side plate, and a landing element that is configured to abut against an adjacent wall beam. The attachment plate and the landing element can advantageously be the same item. In other words, one may use one single component to fulfill the function of the attachment plate and the function of the landing element. These functions will be discussed further below.

The aquaculture tank may further comprise a clamping element configured to clamp the vertical attachment portions of two opposite side plates outwardly against facing vertical wall portions of an adjacent wall beam, wherein the clamping element is configured to be moved from a non-clamping position into a clamping position.

### Example embodiments of the invention

While the present invention has been presented above in general terms, some detailed and non-limiting examples of embodiment will be presented in the following with reference to the drawings, in which
Fig. 1 is a perspective view of several tanks according to the invention, arranged adjacent each other in a systematic fashion;
Fig. 2 is a top view of the tanks shown in Fig. 1;
Fig. 3 is a cross section side view through a portion of a side wall of a tank;
Fig. 4 is a perspective view depicting the parts shown in Fig. 3;
Fig. 5 is a perspective view corresponding to Fig. 4, however with a side plate removed;
Fig. 6 is a perspective view of one side plate;
Fig. 7 is an enlarged perspective view of the side plate shown in Fig. 6;
Fig. 8 is an enlarged cross section view illustrating the interface between two adjacent side plates, arranged laterally next to each other;
Fig. 9 is an enlarged cross section view illustrating two side plates arranged vertically above one-another;
Fig. 10 is a cross section side view through a side wall of a fish tank;
Fig. 11 is a cross section view through a bottom part of a side wall;
Fig. 12 is a cross section view through another bottom part of a side wall;
Fig. 13 is a cross section view through a top part of a side wall;
Fig. 14 is a perspective view showing a portion of a plurality of interconnected tanks;
Fig. 15 is a schematic side view illustrating a plurality of side plates in a stored state;
Fig. 16 is a perspective view of a plurality of tanks having a hexagonal shape;
Fig. 17 is a top view of the tanks shown in Fig. 16;
Fig. 18 is a perspective view of a plurality of tanks having a square shape;
Fig. 19 is a top view of the tanks shown in Fig. 18;
Fig. 20 is a perspective view of a portion of a system having several tanks, with some side plates removed for illustrational purpose;
Fig. 21 depicts several side plates assembled into a long and curved element;
Fig. 22 is another perspective view of a side wall of a tank;
Fig. 23 is a schematic cross section view through two wall beams of an alternative embodiment;
Fig. 24 is a schematic cross section view through another embodiment;
Fig. 25 is an enlarged cross-section view illustrating the connection of one wall beam to another wall beam;
Fig. 26 is a principle perspective view of one side plate, wherein access openings for tool access is provided;
Fig. 27 is another enlarged perspective view of a further embodiment of the side plates;
Fig. 28 is a further perspective view of an embodiment of the side plates;
Fig. 29 is a principle cross-section side view of one side plate having connection flange and attachment flange;
Fig. 30 is another enlarged cross-section side view through the attachment area of two vertically stacked wall beams; and
Fig. 31, Fig. 32, and Fig. 33 are perspective views of different embodiments of a side plate with a connection flange.

The present example embodiment relates to a fish tank or a plurality of fish tanks suitable for an onshore aquaculture facility, such as an RAS facility. Thus, the tank or tanks will be suitable for containing water.

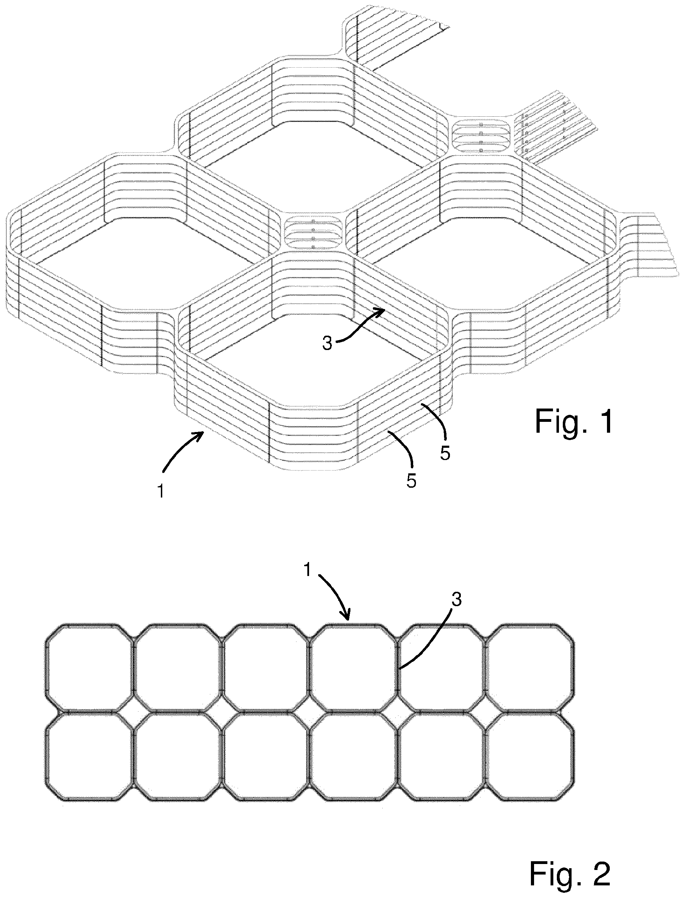

Fig. 1 and Fig. 2 depicts a plurality of fish tanks 1. The side walls 3 of the fish tanks 1 can have a substantially polygonal shape, in the present example an octagonal shape. As appears from Fig. 1 and Fig. 2, the fish tanks 1 share common side walls. Instead of having an octagonal shape, other shapes are possible. For instance, as will be shown further below, the shape of the side walls may be hexagonal or rectangular.

In other embodiments, the side walls of a tank 1 may be circular.

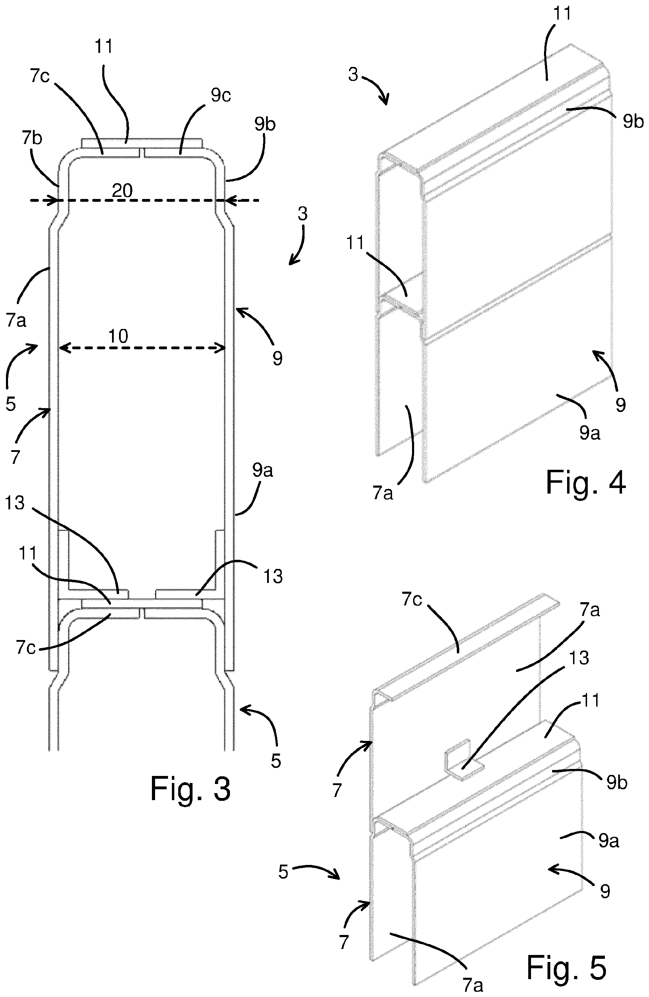

Fig. 3, Fig. 4 and Fig. 5 depict a portion of a side wall 3. The side wall 3 is made up of horizontally extending wall beams 5, of which two are shown in Fig. 3 and Fig. 4. For illustrational purpose, only a short length of the wall beams 5 is shown.

Each wall beam 5 has a first side plate 7 and an oppositely arranged second side plate 9. The first side plate 7 has a vertical wall portion 7a and the second side plate 9 has a vertical wall portion 9a. Between the vertical wall portions 7a, 9a of the first and second side plates 7, 9, respectively, there is a first distance 10.

Furthermore, the first side plate 7 has a vertical attachment portion 7b and the second side plate 9 has a vertical attachment portion 9b. Between the outer faces of the vertical attachment portions 7b, 9b of the first and second side plates 7, 9, respectively, there is second distance 20. When an upper vertical wall beam 5 is installed onto a lower vertical wall beam 5, the second distance 20 is not larger than the first distance 10. Consequently, as shown in Fig. 3, the vertical attachment portions 7b, 9b of the lower wall beam 5 fits within the vertical wall portions 7a, 9a of the upper wall beam 5.

Preferably, the second distance 20 and the first distance 10 are equal, such that the vertical attachment portions 7b, 9b fit snugly into the gap between the vertical wall portions 7a, 9a.

The first distance 10 can in some embodiments be more than 25 cm or even more than 35 cm.

As appears from Fig. 3, the first side plate 7 and the second side plate 9 are separate parts. I.e. they have been manufactured as separate parts and assembled as a part of the side wall 3 of the fish tank 1. Above the vertical attachment portions 7b, 9b, the side plates 7, 9 curve towards each other, into a connection flange 7c, 9c. In the shown embodiment, the faces of the connection flanges 7c, 9c are horizontal, however in other embodiments they may have another inclination with respect to the vertical attachment portions 7b, 9b.

Fixedly attached to the two connection flanges 7c, 9c there is an attachment plate 11. The attachment plate 11 can be fixed to the connection flanges 7c, 9c for instance with glue, bolts or rivets.

As perhaps best illustrated in Fig. 5, where one side plate has been removed for illustrational purpose, however also shown in Fig. 3, a landing element 13 is attached to the inner face of the vertical wall portion 7a, 9a of the side plates 7, 9. In the shown embodiment, the landing element 13 is in the form of an angle bracket, wherein one bracket plate is attached to the inner face of the vertical wall portion 7a, 9a.

As appears from Fig. 3, the landing element 13 is arranged at a distance from the lower edge of the vertical wall portion 7a, 9a. The main technical function of the landing element 13 is to ensure a correct mutual position between the upper wall beam and the lower wall beam 5, when the upper wall beam 3 lands on the lower wall beam 5.

As shown in Fig. 3 and Fig. 5, the landing element 13 will land on the attachment plate 11. The lower parts of the vertical wall portions 7a, 9a can advantageously be fixed to the vertical attachment portions 7b, 9b of the lower (e.g. the previously installed) wall beam 5 by means of glue, bolts, or a combination of glue and bolts. Advantageously, the glue may serve both as a means for fixating the wall beams 5 together, as well as a means for sealing the wall 3, i.e. making the side wall 3 liquid tight.

In the embodiment shown in Fig. 3, Fig. 4, and Fig. 5, the connection flanges 7c, 9c are attached to each other by means of the attachment plate 11. In an alternative embodiment, however, one could extend one or both of the connection flanges 7c, 9c such that they overlap each other. In that way, the connection flanges 7c, 9c could be connected directly to each other, such as with glue and/or bolts. In such embodiments, it would be advantageous to displace the mutual vertical positions of the connection flanges 7c, 9c, such that they will overlap each other without displacing the remaining parts of the side plates 7, 9.

In the discussed embodiment, the wall beams 5 are downwardly open and landed from above onto the vertical attachment portions 7b, 9b. It shall be clear, however, that the wall beams 5 also could be arranged upside down with respect to the shown embodiment. Hence, the use of terms like upper and lower, is merely for explanation.

The side plate 7, 9 is advantageously produced in one piece, such as by vacuum moulding. The side plate 7, 9 is made of glass-fiber reinforced plastic (GRP) or fiber-reinforced plastic (FRP).

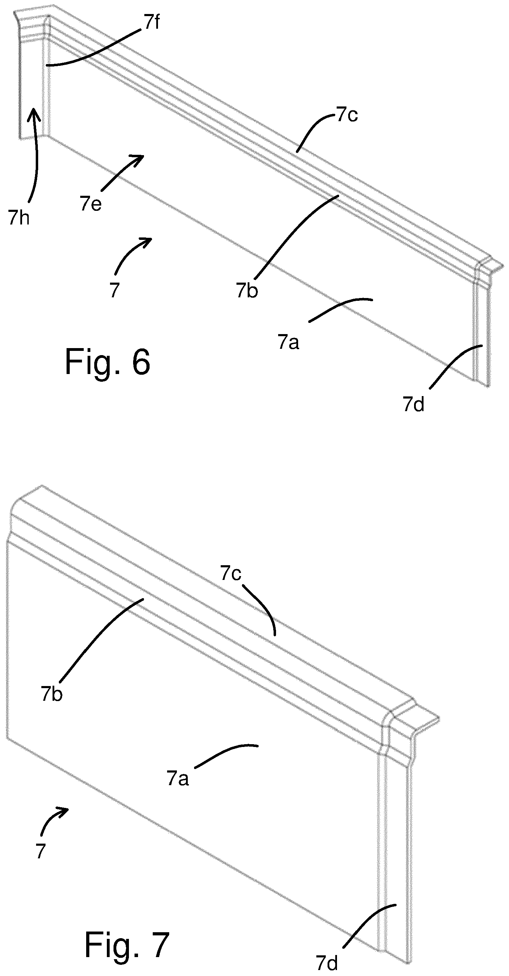

Reference is now made to Fig. 6, which is a perspective view of a side plate 7.

At one end of the side plate 7, it comprises a lateral attachment portion 7d. The lateral attachment portion 7d is in the form of a recessed step. The recessed step 7d is configured to be arranged overlapping an adjacent end of another side plate (not shown) such that the recessed step 7d can be attached to the end of the adjacent side plate. The connection can be made by glue and/or bolts. Fig. 7 depicts the lateral attachment portion 7d of the side plate 7 in better detail.

Advantageously, the recced step 7d is displaced with respect to the main faces of the side plate 7 with a distance that equals the thickness of the side plate 7.

Thus, when an adjacent side plate is connected to the side plate 7, the main faces of the two side plates will be flush.

The side plate 7 shown in Fig. 6 further comprises an edge 7f. The edge 7f is arranged between a first part 7e of the side plate 7 that extends in a first horizontal direction, and a second part 7h of the side plate 7 that extends in a second horizontal direction. In the shown embodiment, the angle of the edge 7f is orthogonal. The profile of the first part 7e is the same as for the second part 7h of the side plate 7. Hence, the first part 7e of the side plate 7 will be compatible with a lateral attachment portion 7d of another side plate.

While the angle of the edge 7f between the first and second extensions of the side plate 7 shown in Fig. 6 is orthogonal, the angle may different. The angle of the edge 7f will determine the overall shape of the fish tank 1, i.e. the angle between the adjacent side walls 3.

In some embodiments, the side plates 7, 9 may be straight, i.e. without the edge 7f shown in Fig. 6.

In some embodiments, the side plates 7, 9 may be curved, thus being suitable for a curved side wall 3. Such curved side walls 3 may together form a circular shaped tank 1. A combination of straight and curved side walls 3 is also possible.

As the skilled person will understand from Fig. 6, a plurality of side walls 7, such as shown in Fig. 6, can be readily stacked for storage and transport. One face of one side wall 7 will substantially be equal to the opposite face (i.e. a facing face) of another side wall 7.

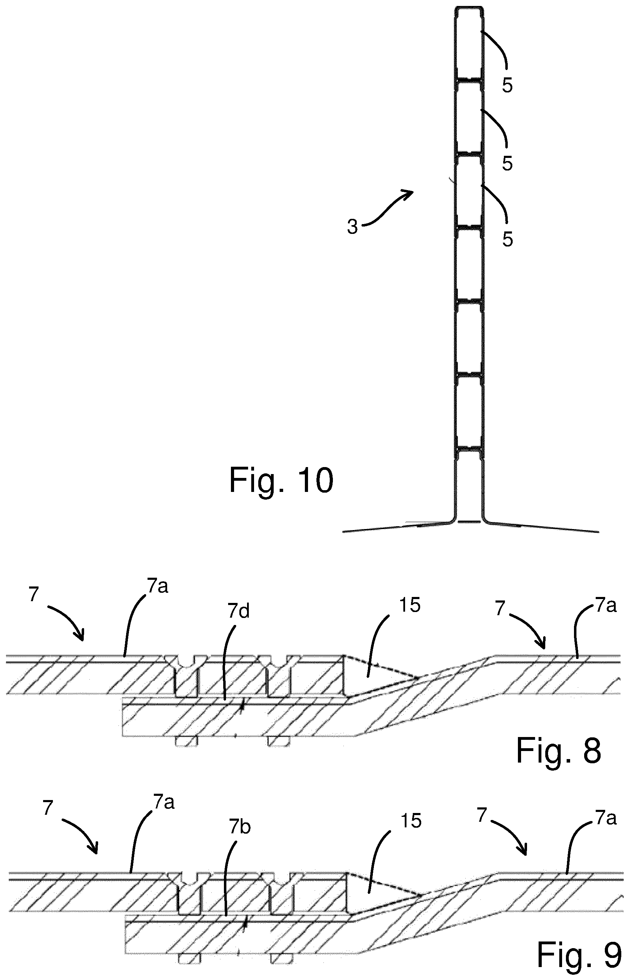

Fig. 8 depicts a cross section view through two side plates 7 that are joined. The lateral attachment portion 7d overlaps with the end of the adjacent side plate. Furthermore, a strip 15 of an elastic and curing material is arranged to seal the interface between the two side plates and to avoid sharp edges.

Fig. 9 is a view corresponding to Fig. 8. However, Fig. 9 depicts the interface between the vertical wall portion 7a one side plate 7 and the vertical attachment portion 7b of an adjacent side plate 7.

Fig. 10 is a cross section view through a complete height of a side wall 3. In this embodiment, the side wall 3 comprises seven wall beams 5 that are stacked on top of each other. The added height of each wall beam 5 can for instance be between 70 and 120 cm. With the term added height is meant the increase of height that is obtained by installing one wall beam 5 onto a previous wall beam 5. Thus, with the embodiment shown in Fig. 10, the total height of the side wall 3 can typically be between 4,9 m and 8,4 m.

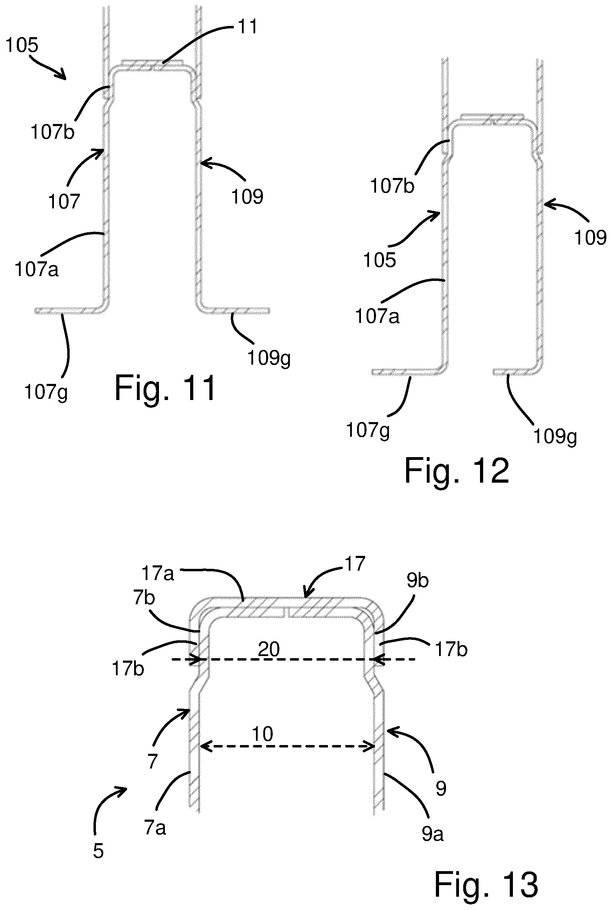

Fig. 11 and Fig. 12 depict two alternative embodiments of a foot wall beam 105. The design of the foot wall beams 105 may resemble the previously discussed wall beams 5 in many respects. For instance, they can be provided with side plates 107, 109 that comprise a vertical wall portion 107a and a vertical attachment portion 107b. However, at their lower sections, they are provided with a foot flange 107g, 109g.

In some embodiments, the foot flanges 107g, 109g extend with a substantially horizontal orientation, out from the side wall 3, i.e. out from the main portion of the wall beam 105. In other embodiments, as depicted in Fig. 12, a first foot flange 107g extends out from the side wall 3, while the second foot flange 109g extends in the same direction as the first foot flange 107g. In this manner, one is able, for instance, to assemble the fish tank 1 immediately next to a vertical wall, such as the inner face of a building wall, or any other object. The fish tank 1 will in this manner reduce its footprint.

Fig. 13 is a cross section view through the upper wall beam 5. Instead of another wall beam 5 landed on top of it, there is arranged a top wall cover 17. The top wall cover 17 fulfills, inter alia, the technical purpose of the attachment plate 11 used in the lower wall beams 5. The top wall cover 17 comprises a horizontal portion 17a. On both sides of the horizontal portion 17a extend a vertical, downwardly extending side flange 17b. The distance between the two side flanges 17b corresponds to the second distance 20, i.e. the distance between the outer faces of the vertical attachment portions 7b of the side plates 7, 9.

The top wall cover 17 can advantageously be fixed to the side plates 7, 9 by means of glue and/or bolts. Possible bolts may advantageously penetrate through the side flanges 17b, thereby leaving the horizontal portion 17a intact.

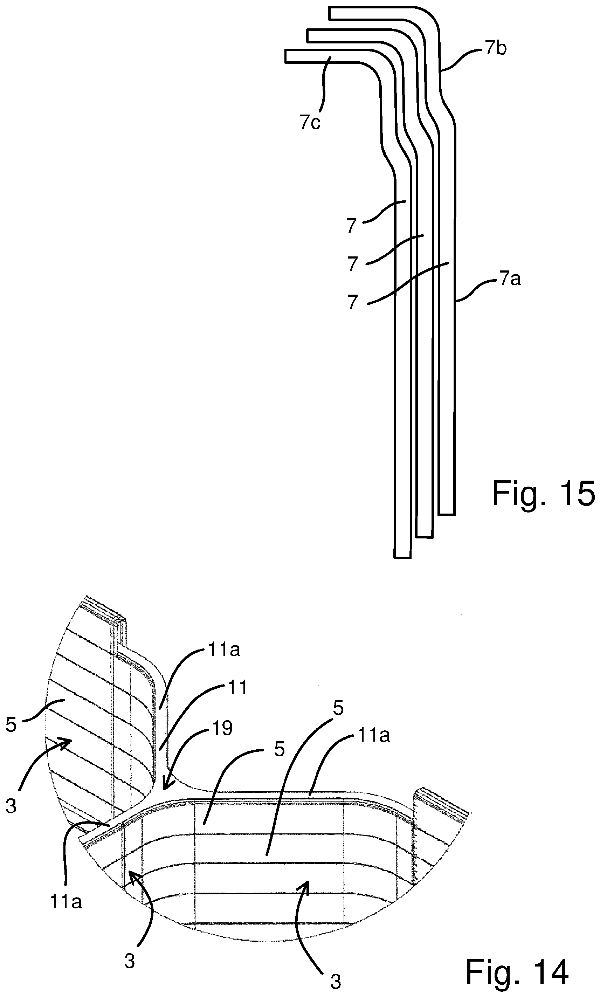

Fig. 14 depicts a portion of a tank system having a plurality of fish tanks 1, such as depicted in Fig. 1 and Fig. 2. In the shown view, three side walls 3 meet at an intersection 19. At the position of the intersection 19, the attachment plate 11 comprises three branches 11a.

Thus, the three interfacing side walls 3 comprise a plurality of attachment plates 11 that connect the side walls 3 rigidly together with their attachment plate branches 11a. On top of the upper-most wall beam 5, there may be a (not shown) top wall cover 17 having three top wall cover branches, similar to the attachment plate branches 11a. Thus, a strong mechanical integrity of the fish tanks 1 is provided.

Fig. 15 is a schematic cross section view of three side plates 7, depicting how several side plates 7 are suitable for being stacked in a compact fashion for storage or transport.

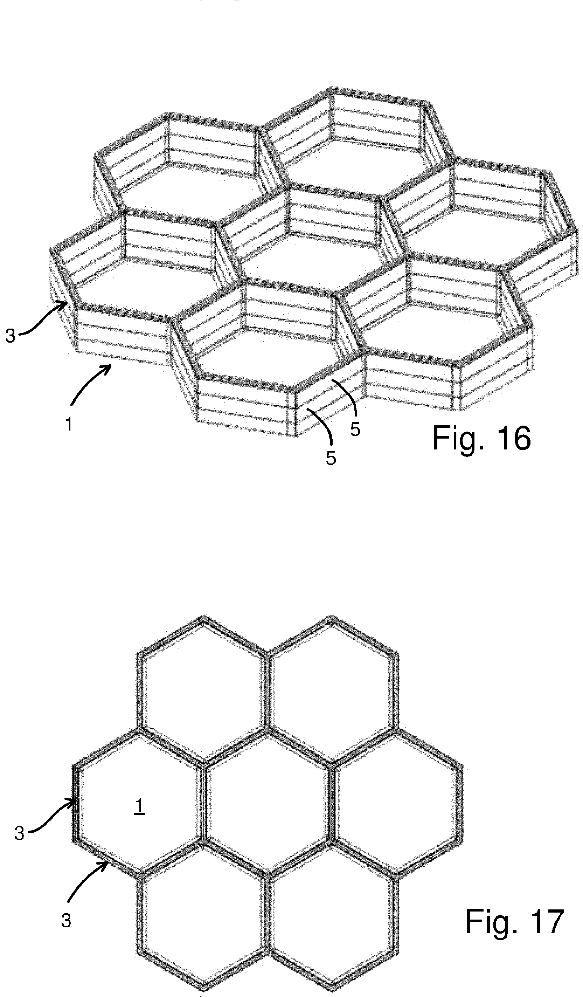

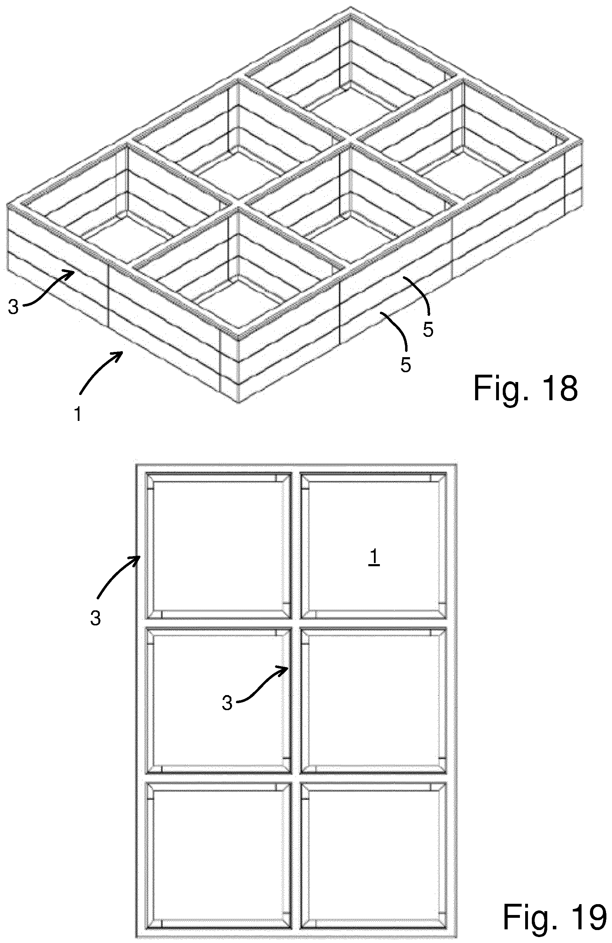

Fig. 16 to Fig. 19 depict two further overall shapes of the fish tanks 3. Fig. 16 and Fig. 17 depict fish tanks 1 having a hexagonal layout, while Fig. 18 and Fig. 19 depict fish tanks 1 that have a square layout.

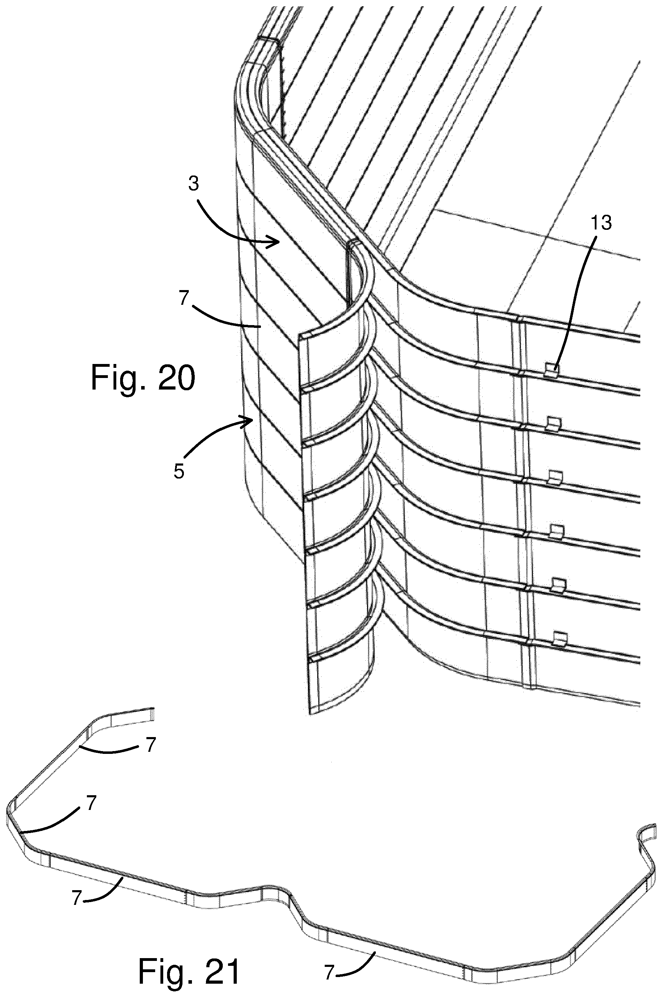

Fig. 20 shows how a stack of curved side plates 7 are joined into a stack of wall beams 5 that together form a tank wall 3. In this image, some side plates are removed for illustrational purpose.

Fig. 21 depicts a series of connected side plates 7, typically connected by gluing and / or bolting their lateral attachment portions 7d, e.g. the recessed steps, to the end portion of the adjacent side plate 7. As the skilled reader will appreciate, the connected side plates 7 shown in Fig. 21 would fit with the embodiment shown in Fig. 1 and Fig. 2.

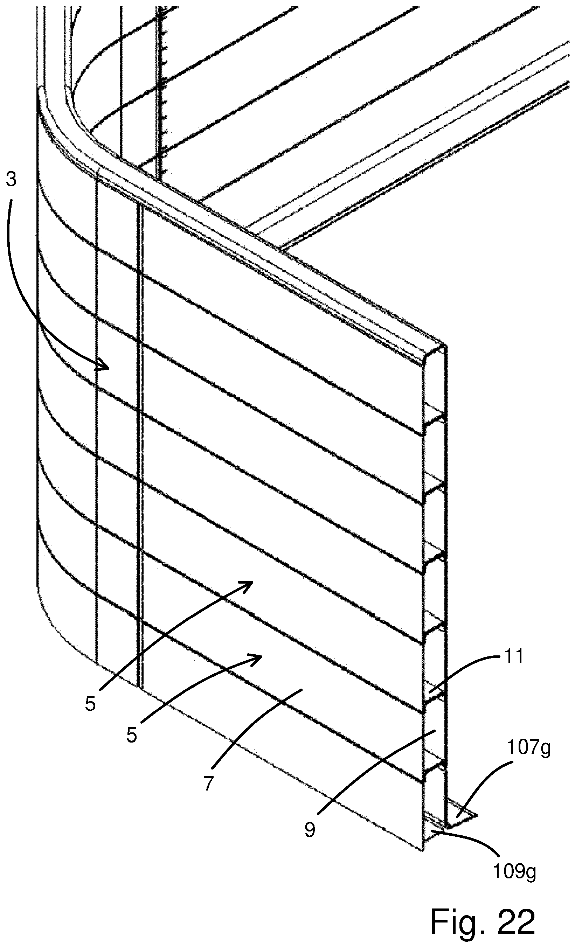

Fig. 22 is a perspective view of a side wall 3 of a tank, with the wall cut off for illustrational purpose.

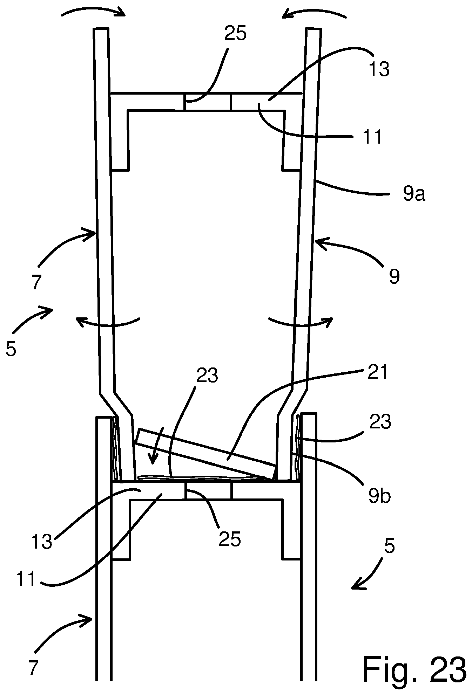

Fig. 23 is a schematic cross section view through the interface between two wall beams 5, each having a first and a second side plate 7, 9. In the embodiment shown in Fig. 23, the attachment plate 11 that connect the side plates 7, 9 is the same item as the landing element 13. As shown, the attachment plate 11 and the landing element 13, which are the same item, has a substantially flat, horizontal surface with two side flanges arranged orthogonally with respect to the flat, horizontal surface.

Still referring to Fig. 23, layers of glue 23 are indicated between the vertical wall portions 7a, 9a and the vertical attachment portions 7b, 9b of the side plates 7, 9. A clamping element, here shown as a clamping plate 21, is configured to be moved into a clamping position between the vertical attachment portions 7b, 9b. When in the clamping position, it compresses the glue between the vertical attachment portions 7b, 9b and the vertical wall portions 7a, 9a, thus ensuring a solid connection between the adjacent wall beams 5.

In the shown embodiment, a layer of glue 23 is also arranged between the clamping plate 21 and the attachment plate 11.

To enable movement of the clamping plate 21 between the non-clamping position and the clamping position, the attachment plate 11 is provided with access apertures 25. Hence, one will be able to force the clamping plate 21 into the clamping position for instance by forcing it into position with a rod extended through the access aperture 25.

In the situation shown in Fig. 23, an upper wall beam 5 is about to be installed on a lower wall beam 5. Advantageously, both the side plates 7, 9 and the attachment plate 11 are made of a fiber-reinforced plastic material. Hence, the material is somewhat flexible. To insert the vertical attachment portions 7b, 9b into the first distance 10, i.e. between the vertical wall portions 7a, 9a, the vertical wall portions 7b, 9b are flexed towards each other. In this manner, one avoids scraping off or moving the layers of glue 23. To obtain the flexed configuration shown in Fig. 23, one may simply use manual force while moving the wall beams together. In addition, or instead, one could also temporarily introduce an installation element (not shown) between the vertical wall portions, above the attachment plate 11, so as to obtain the non-parallel configuration of the side plates 7, 9.

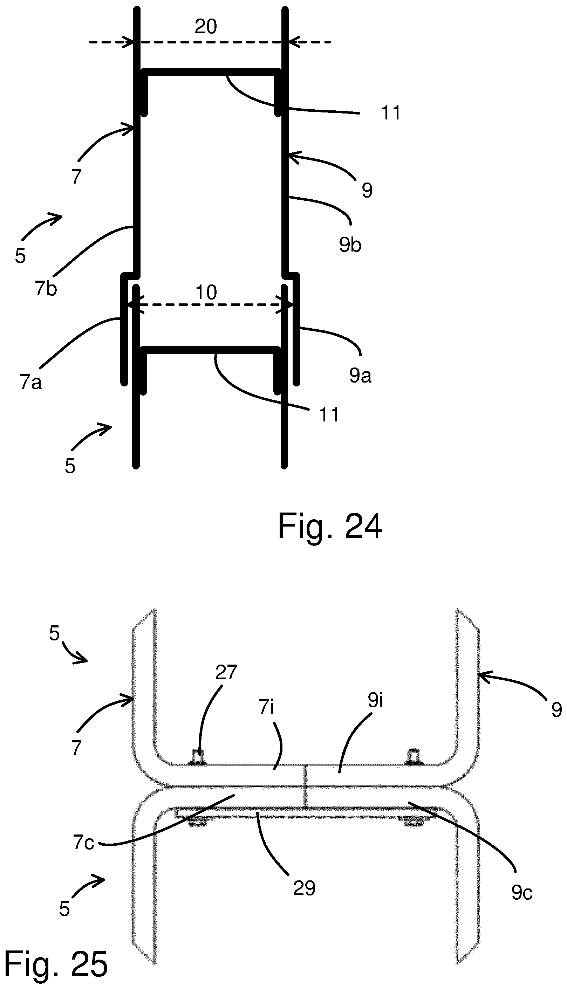

Fig. 24 illustrates an alternative embodiment of the present invention. In this embodiment, the vertical attachment portions 7b, 9b are larger than the vertical wall portions 7a, 9a.

Fig. 25 shows the lower portion of one wall beam 5 landed on the upper part of another wall beam 5, according to another embodiment. According to this embodiment, the two opposite side plates 7, 9 are not attached by introducing the vertical attachment portions 7b, 9b into the gap between the vertical wall portions 7a, 9a. Instead, the side plates 7, 9 further comprise attachment flanges 7i, 9i in addition the connection flanges 7c, 9c. The attachment flanges 7i, 9i extend parallel to the connection flanges 7c, 9c, at the opposite vertical ends of the side plates 7, 9. Hence, the upper wall beam 5 is landed on the lower wall beam 5 by landing the attachment flanges 7i, 9i onto the connection flanges 7c, 9c, as illustrated in Fig. 25. A plurality of bolts 27 are used to attach the flanges together. In this embodiment, there is also arranged a fixation plate 29 that adsorbs the tensioning forces of the bolts 27.

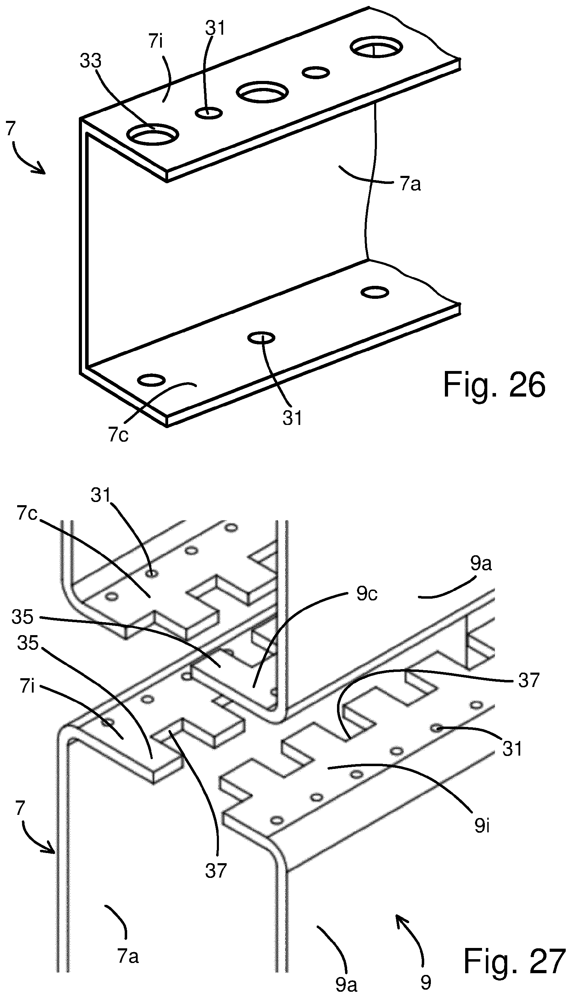

Fig. 26 depicts a principle view of one side plate 7 that is provided with both the connection flange 7c and the attachment flange 7i. Both the connection flange 7c and the attachment flange 7i are provided with bolt apertures 31. The bolt apertures 31 are configured to receive bolts 27, for connection to the neighboring side plate 7. Furthermore, to provide access to the bolts 27 during installation, the attachment flange 7i is provided with access apertures 33. Thus, when the side plate 7 has landed on top of a previous side plate (not shown in Fig. 26), with bolts 27 protruding up through the bolt apertures 31 of the connection flange 7c, a tool (not shown) can be inserted through the access aperture 33 to secure a nut (not shown) onto the bolt 27.

In some embodiments, the bolts 27 can be pre-attached to the attachment flange 7i, protruding upwards.

In the embodiment shown in Fig. 26, the access apertures 33 of the attachment flange 7i are located directly above the bolt apertures 31 of the connection flange 7c. In this manner, the tool (not shown) can be directed directly onto the awaiting bolt 27 without an angle. In such embodiments, however, the position of the access apertures 33 of the succeeding side plate 7 should be displaced, such that the bolt apertures 31 of the connection flange 7c and the attachment flange 7i are aligned.

Fig. 27 depicts an embodiment where the connection flange 7c and the attachment flange 7i comprise a plurality of protrusions 35 and a plurality of receiving recesses 37. In Fig. 27 the side plates 7, 9 are shown in an exploded view for illustrational purpose. When assembled, the protrusions 35 will extend into the receiving recesses 37. In addition, bolts 27 (not shown) will extend through the bolt apertures 31.

The engagement between the protrusions 35 and the receiving recesses 37 will transfer shear forces between the opposite side plates 7, 9. Such shear forces can typically be significant if for instance one tank 1 is filled with water, while an adjacent tank 1 is empty. The hydrostatic pressure will then flex the wall 3 into a curved shape, and thus expose the wall 3 to shear forces.

While the protrusions 35 and receiving recesses 37 of the shown embodiment comprise edges extending in a longitudinal and crosswise direction, with respect to the longitudinal direction of the wall beams 5, other embodiments may have a different pattern. For instance, the protrusions 35 and the receiving recess 37 may have a zig-zag pattern, or for instance a sinusoidal pattern.

Moreover, still referring to Fig. 27, in the shown embodiment, the protrusions 35 of the connection flange 7c of the first side plate 7 overlap the protrusions 35 of the attachment flange 9i of the second side plate 9. In this manner, additional fixation of the opposite side plates 7, 9 can be obtained, for instance by providing glue or an adhesive between the overlapping protrusions 35.

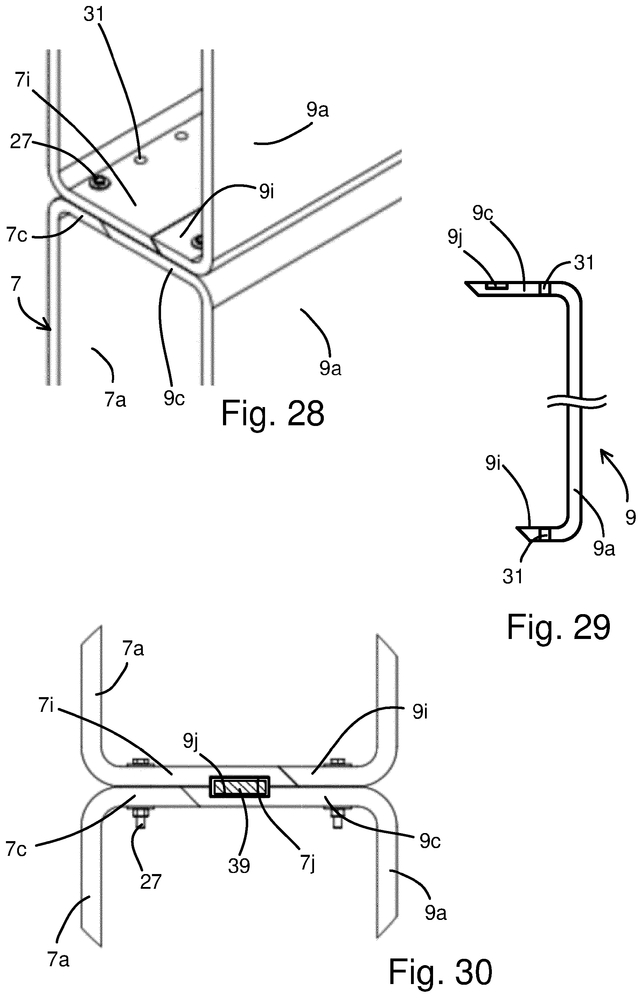

Fig. 28 depicts another embodiment, wherein the connection flanges 7c, 9c and the attachment flanges 7i, 9i of the respective side plates 7, 9 extend horizontally and crosswise to the longitudinal extension of the wall beams 5, with different lengths. This is better shown with the cross section view of Fig. 29, wherein a second side plate 9 is shown with the connection flange 9c having a longer crosswise, horizontal extension than its attachment flange 9i. With such a system, as shown in Fig. 27, the first side plate 7 will have the opposite difference, namely a connection flange 7c with a smaller extension than the attachment flange 7i.

A result of the different horizontal extension is that the connection flange 7c, 9c of one side plate 7, 9 will overlap with the attachment flange 7i, 9i of the opposite, overlying or underlying side plate 7, 9. This enables the opposite side plates 7, 9 to be connected to each other, for instance by applying glue between the flanges at the overlapping portion.

The embodiment discussed with reference to Fig. 28 and Fig. 29 above is shown with a cross section view in Fig. 30. In addition, as shown in Fig. 29 and in Fig. 30, there is arranged a fixation slot 7j, 9j in the attachment flange 7i of the first side plate 7 and in the connection flange 9c of the second side plate 9. The two fixation slots 7j, 9j extend in the longitudinal direction of the side plates 7, 9. Furthermore, two fixation slots 7j, 9j oppose each other and are aligned with each other, such that they together can receive an elongated fixation member 39. The fixation member 39 fits snugly into the two aligned fixation slots 7j, 9j, and thus contributes to maintaining the opposite side plates 7, 9 together. The fixation member 39 can be inserted into the fixation slots 7j, 9j with a longitudinal movement, or it can be landed into the upwardly facing fixation slot 9j before the opposite side plate 7 is landed.

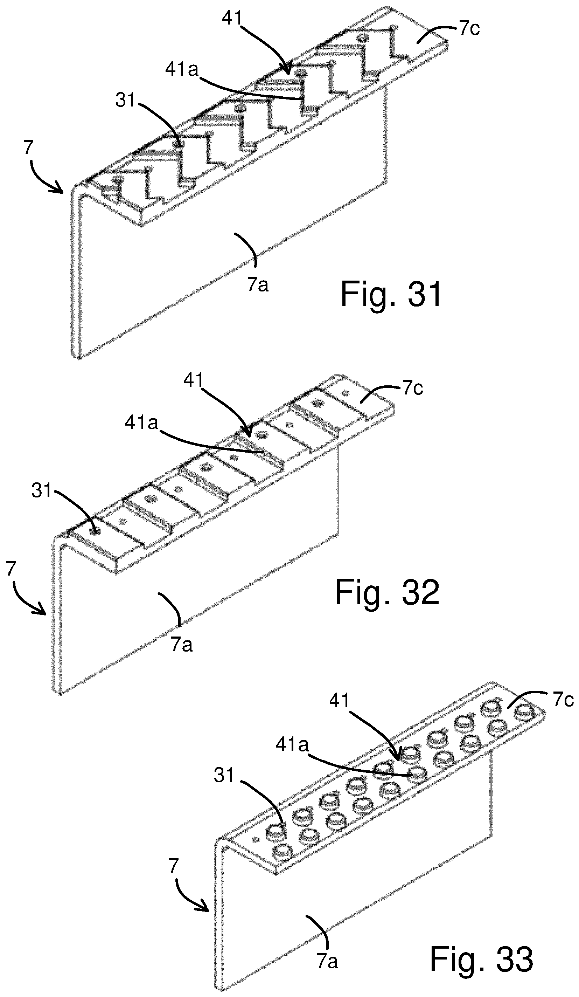

Fig. 31 depicts the upper portion of a first side plate 7. The upper face of the connection flange 7c is provided with a securing pattern 41. The securing pattern 41 of the embodiment shown in Fig. 31 comprises pattern edges 41a that extend with an inclined direction, with respect to the longitudinal direction of the first side plate 7 (and thus with respect to longitudinal direction of the wall beam 5). This securing pattern 41 is configured to engage with an opposite (not shown) securing pattern on the downwardly facing face on the attachment flange 7i of the first side plate 7 (not shown) above it. It will thus be understood that among the two engaging securing patterns 41, the recesses of one pattern will receive protrusions of the opposite pattern.

The securing pattern 41 shown in Fig. 31 is thus configured to transfer forces between the two vertically stacked first side plates 7 both in the longitudinal and crosswise directions.

It will be understood that also the second side plate 9 will be provided with the securing pattern 41 on the connection flange 9c and on the facing attachment flange 9i.

Fig. 32 depicts a similar embodiment. However, in the embodiment shown in Fig. 32, the pattern edges 41a of the securing pattern 41 extend in a direction perpendicular to the longitudinal extension of the first side plate 7.

Finally, Fig. 33 shows an embodiment wherein the pattern edges 41a of the securing pattern 41 is in the form of circles. This securing pattern 41 comprises a plurality of upwardly extending protrusions. As will be understood, the oppositely facing securing pattern 41 of the attachment flange 7i will thus comprise receiving recesses (not shown) that receive the protrusions.

In some embodiments, the side plates 7, 9 can comprise connection flanges 7c, 9c and attachment flanges 7i, 9i of different length, such as shown in Fig. 28 and in Fig. 29, wherein the overlapping portions comprise a securing pattern 41.

The fish tanks 1 discussed herein can be stored and transported in a relatively compact state, since the main parts are configured to be stacked in a compact state. This advantage facilitates transport of large fish tanks 1 even remote from the sea, i.e. without the use of seagoing vessels.

The light weight of the composite plastic material, such as GRP, which is used to manufacture the side plates 7, 9, results in fish tanks 1 having relatively light weight. Another advantage of using composite plastic material, is its ability to adapt to ground settling better than a corresponding fish tank made of concrete.

Yet a further advantage of the presented tank 1, is that it is possible to disassemble it in a non-destructive manner and possible re-assemble it. This contrasts to known tanks made in concrete, which will require a significant effort for disassembly.

The side plates 7, 9 can typically have a thickness in the range between 15 to 30 mm.

The tank 1 according to the present invention can typically accommodate 1000 to 5000 m³ of water.

Arranging the wall beams 5 in a horizontal orientation is advantageous since they are then suited for adsorbing tensile forces resulting from the pressure from the contained water.

Advantageously, the tank according to the invention will have a bottom that is also made of GRP material. This is, however, not discussed herein.

## Claims

1. A fiber-reinforced plastic material aquaculture tank (1) comprising side walls (3), wherein the side walls (3) comprise a plurality of horizontally oriented wall beams (5) stacked vertically on top of each other, wherein the respective wall beams (5) comprise a first side plate (7) and an oppositely arranged second side plate (9), wherein the first and second side plates (7, 9), respectively, comprise
- a vertical wall portion (7a, 9a), wherein there is a horizontal distance (10) between the vertical wall portions (7a, 9a) of the first and second side plates (7, 9), respectively;
and wherein the first and second plates (7, 9) are made of a fiber-reinforced plastic material,
wherein the side plates (7, 9) further comprise connection flanges (7c, 9c) that extend parallel to the horizontal extension of the wall beams (5), and wherein the connection flanges (7c, 9c) of the respective two oppositely arranged side plates (7, 9) curve towards each other,
**characterized in that** the connection flanges (7c, 9c) comprise bolt apertures (31) and access apertures (33).

2. A fiber-reinforced plastic material aquaculture tank (1) according to claim 1, **characterized in that** the side plates (7, 9) further comprise attachment flanges (7i, 9i) that are arranged vertically opposite of the connection flanges (7c, 9c) and that extend parallel to the horizontal extension of the wall beams (5), and wherein the attachment flanges (7i, 9i) of the respective two oppositely arranged side plates (7, 9) curve towards each other.

3. A fiber-reinforced plastic material aquaculture tank (1) according to claim 1, **characterized in that** the connection flange (7c, 9c) and the attachment flange (7i, 9i) of the respective side plates (7, 9) extend with a different horizontal extension crosswise to the longitudinal length of the side plates, wherein a portion of one connection flange (7c, 9c) of one side plate (7, 9) overlaps with a portion of one attachment flange (7i, 9i) of an opposite and below side plate (7, 9).

4. A fiber-reinforced plastic material aquaculture tank (1) according to claim 2, or according to claim 3 and any one of claim 4 and claim 5, **characterized in that** the connection flanges (7c, 9c) and the attachment flanges (7i, 9i) comprise a securing pattern (41).

5. A fiber-reinforced plastic material aquaculture tank (1) according to claim 3, **characterized in that** respective side plates (7, 9) comprise a connection flange (7c, 9c) and an attachment flange (7i, 9i) which each comprises a respective fixation slot (7j, 9j) that together receives a fixation member (39).

6. A fiber-reinforced plastic material aquaculture tank (1) according to any one of the preceding claims, **characterized in that** the connection flanges and/or attachment flanges (7i, 9i) comprise a plurality of protrusions (35) and a plurality of receiving recesses (37), wherein the protrusions (35) extend into the receiving recesses (37).

7. A fiber-reinforced plastic material aquaculture tank (1) according to claim 1, **characterized in that** the said horizontal distance is a first horizontal distance (10), and that the first and second side plates (7, 9), respectively, comprise
- a vertical attachment portion (7b, 9b), wherein there is a second horizontal distance (20) between the outer faces of the vertical attachment portions (7b, 9b) of the first and second side plates (7, 9), respectively;
wherein the first horizontal distance (10) is equal to or larger than the second horizontal distance (20),
wherein the vertical attachment portions (7b, 9b) are located between the vertical wall portions (7a, 9a),

8. An aquaculture tank (1) according to claim 1 or claim 7, **characterized in that** the wall beam (5) further comprises an attachment plate (11), connected to both opposite side plates (7, 9) and that the attachment plate (11) connects to said connection flanges (7c, 9c).

9. An aquaculture tank (1) according to one of the preceding claims, **characterized in that** among the two side plates (7, 9) of one wall beam (5), the vertical wall portion (7a) of a first side plate (7) constitutes an inner wall face of the aquaculture tank (1), and the vertical wall portion (9a) of a second side plate (9) constitutes an inner wall face of an adjacent aquaculture tank (1).

10. An aquaculture tank (1) according to one of claims 8 to 9, **characterized in that** the attachment plate (11) comprises three branches (11a) extending from an intersection (19) and into separate side walls (3) of adjacent aquaculture tanks (1).

11. An aquaculture tank (1) according to one of the preceding claims, **characterized in that** one or more side plates (7, 9) comprise an attachment portion in the form of a recessed step (7d) at an end of the side plate (7, 9), wherein the recessed step (7d) overlaps with and connects to an end of an adjacent side plate (7, 9).

12. An aquaculture tank (1) according to one of the preceding claims, **characterized in that** it comprises an attachment plate (11) that connects the first side plate (7) to the second side plate (9), and a landing element (13) configured to abut against an adjacent wall beam (5), and that the attachment plate (11) and the landing element (13) is the same item.

13. An aquaculture tank (1) according to one of the preceding claims, **characterized in that** it further comprises a clamping element (21) configured to clamp the vertical attachment portions (7b, 9b) of two opposite side plates (7, 9) outwardly against facing vertical wall portions (7a, 9a) of an adjacent wall beam (5), wherein the clamping element (21) is configured to be moved from a non-clamping position into a clamping position.

## Patentansprüche

1. Aquakulturtank (1) aus faserverstärktem Kunststoffmaterial, der Seitenwände (3) umfasst, wobei die Seitenwände (3) eine Vielzahl von horizontal ausgerichteten Wandbalken (5) umfassen, die vertikal aufeinandergestapelt sind, wobei die jeweiligen Wandbalken (5) eine erste Seitenplatte (7) und eine gegenüber angeordnete zweite Seitenplatte (9) umfassen, wobei die erste und zweite Seitenplatte (7, 9) jeweils
- einen vertikalen Wandabschnitt (7a, 9a) umfassen, wobei jeweils zwischen den vertikalen Wandabschnitten (7a, 9a) der ersten und zweiten Seitenplatte (7, 9) ein horizontaler Abstand (10) besteht;
und wobei die erste und zweite Platte (7, 9) aus faserverstärktem Kunststoffmaterial hergestellt sind,
wobei die Seitenplatten (7, 9) weiter Verbindungsflansche (7c, 9c) umfassen, die sich parallel zur horizontalen Erstreckung der Wandbalken (5) erstrecken, und wobei die Verbindungsflansche (7c, 9c) der jeweiligen zwei gegenüber angeordneten Seitenplatten (7, 9) zueinander gekrümmt sind,
**dadurch gekennzeichnet, dass** die Verbindungsflansche (7c, 9c) Bolzenöffnungen (31) und Zugangsöffnungen (33) umfassen.

2. Aquakulturtank (1) aus faserverstärktem Kunststoffmaterial nach Anspruch 1, **dadurch gekennzeichnet, dass** die Seitenplatten (7, 9) weiter Befestigungsflansche (7i, 9i) umfassen, die vertikal gegenüber den Verbindungsflanschen (7c, 9c) angeordnet sind und die sich parallel zur horizontalen Erstreckung der Wandbalken (5) erstrecken, und wobei die Befestigungsflansche (7i, 9i) der jeweiligen zwei gegenüber angeordneten Seitenplatten (7, 9) zueinander gekrümmt sind.

3. Aquakulturtank (1) aus faserverstärktem Kunststoffmaterial nach Anspruch 1, **dadurch gekennzeichnet, dass** sich der Verbindungsflansch (7c, 9c) und der Befestigungsflansch (7i, 9i) der jeweiligen Seitenplatten (7, 9) mit einer unterschiedlichen horizontalen Erstreckung quer zur Längsrichtung der Seitenplatten erstrecken, wobei ein Abschnitt eines Verbindungsflansches (7c, 9c) einer Seitenplatte (7, 9) sich mit einem Abschnitt eines Befestigungsflansches (7i, 9i) einer gegenüberliegenden und unteren Seitenplatte (7, 9) überlappt.

4. Aquakulturtank (1) aus faserverstärktem Kunststoffmaterial nach Anspruch 2, oder nach Anspruch 3 und einem von Anspruch 4 und Anspruch 5, **dadurch gekennzeichnet, dass** sich die Verbindungsflansche (7c, 9c) und die Befestigungsflansche (7i, 9i) ein Sicherungsmuster (41) umfassen.

5. Aquakulturtank (1) aus faserverstärktem Kunststoffmaterial nach Anspruch 3, **dadurch gekennzeichnet, dass** jeweilige Seitenplatten (7, 9) einen Verbindungsflansch (7c, 9c) und einen Befestigungsflansch (7i, 9i) umfassen, die jeweils einen jeweiligen Fixierungsschlitz (7j, 9j) umfassen, der zusammen ein Fixierungselement (39) aufnimmt.

6. Aquakulturtank (1) aus faserverstärktem Kunststoffmaterial nach einem der vorstehenden Ansprüche, **dadurch gekennzeichnet, dass** die Verbindungsflansche und/oder Befestigungsflansche (7i, 9i) eine Vielzahl von Vorsprüngen (35) und eine Vielzahl von aufnehmenden Vertiefungen (37) umfassen, wobei sich die Vorsprünge (35) in die aufnehmenden Vertiefungen (37) erstrecken.

7. Aquakulturtank (1) aus faserverstärktem Kunststoffmaterial nach Anspruch 1, **dadurch gekennzeichnet, dass** der horizontale Abstand ein erster horizontaler Abstand (10) ist und dass die erste und zweite Seitenplatte (7, 9) jeweils
- einen vertikalen Befestigungsabschnitt (7b, 9b) umfassen, wobei jeweils zwischen den Außenflächen der vertikalen Befestigungsabschnitte (7b, 9b) der ersten und zweiten Seitenplatte (7, 9) ein zweiter horizontaler Abstand (20) besteht;
wobei ein erster horizontaler Abstand (10) gleich oder größer als der zweite horizontale Abstand (20) ist,
wobei sich die vertikalen Befestigungsabschnitte (7b, 9b) zwischen den vertikalen Wandabschnitten (7a, 9a) befinden.

8. Aquakulturtank (1) nach Anspruch 1 oder Anspruch 7, **dadurch gekennzeichnet, dass** der Wandbalken (5) weiter eine Befestigungsplatte (11) umfasst, die mit beiden gegenüberliegenden Seitenplatten (7, 9) verbunden ist und die die Befestigungsplatte (11) mit den Verbindungsflanschen (7c, 9c) verbindet

9. Aquakulturtank (1) nach einem der vorstehenden Ansprüche, **dadurch gekennzeichnet, dass** von den zwei Seitenplatten (7, 9) eines Wandbalkens (5) der vertikale Wandabschnitt (7a) einer ersten Seitenplatte (7) eine innere Wandfläche des Aquakulturtanks (1) bildet und der vertikale Wandabschnitt (9a) einer zweiten Seitenplatte (9) eine innere Wandfläche eines angrenzenden Aquakulturtanks (1) bildet.

10. Aquakulturtank (1) nach einem der Ansprüche 8 bis 9, **dadurch gekennzeichnet, dass** die Befestigungsplatte (11) drei Zweige (11a) umfasst, die sich von einer Grenzfläche (19) und in getrennte Seitenwände (3) von angrenzenden Aquakulturtanks (1) erstrecken.

11. Aquakulturtank (1) nach einem der vorstehenden Ansprüche, **dadurch gekennzeichnet, dass** eine oder mehrere Seitenplatten (7, 9) einen Befestigungsabschnitt in der Form einer vertieften Stufe (7d) an einem Ende der Seitenplatte (7, 9) umfassen, wobei die vertiefte Stufe (7d) sich mit einem Ende einer angrenzenden Seitenplatte (7, 9) überlappt und verbunden ist.

12. Aquakulturtank (1) nach einem der vorstehenden Ansprüche, **dadurch gekennzeichnet, dass** er eine Befestigungsplatte (11), die die erste Seitenplatte (7) mit der zweiten Seitenplatte (9) verbindet, und ein Podestelement (13) umfasst, das konfiguriert ist, um an einem angrenzenden Wandbalken (5) anzuliegen, und dass die Befestigungsplatte (11) und das Podestelement (13) der gleiche Gegenstand sind.

13. Aquakulturtank (1) nach einem der vorstehenden Ansprüche, **dadurch gekennzeichnet, dass** er weiter ein Klemmelement (21) umfasst, das konfiguriert ist, um die vertikalen Befestigungsabschnitte (7b, 9b) von zwei gegenüberliegenden Seitenplatte (7, 9) nach außen gegen zugewandten vertikalen Wandabschnitten (7a, 9a) eines angrenzenden Wandbalkens (5) zu klemmen, wobei das Klemmelement (21) konfiguriert ist, um von einer Nicht-Klemmstellung in eine Klemmstellung bewegt zu werden.

## Revendications

1. Réservoir d'aquaculture (1) en matériau plastique renforcée par des fibres comprenant des parois latérales (3), dans lequel les parois latérales (3) comprennent une pluralité de poutres (5) de paroi orientées horizontalement, empilées verticalement les unes sur les autres, dans lequel les poutres (5) de paroi respectives comprennent une première plaque latérale (7) et une seconde plaque latérale (9) agencée de manière opposée, dans lequel les première et seconde plaques latérales (7, 9), respectivement, comprennent
- une partie (7a, 9a) de paroi verticale, dans lequel une distance horizontale (10) est présente entre les parties (7a, 9a) de paroi verticales des première et seconde plaques latérales (7, 9), respectivement ;
et dans lequel les première et seconde plaques (7, 9) sont en un matériau plastique renforcé par des fibres,
dans lequel les plaques latérales (7, 9) comprennent en outre des bords de raccordement (7c, 9c) qui s'étendent parallèlement à l'extension horizontale des poutres (5) de paroi, et dans lequel les bords de raccordement (7c, 9c) des deux plaques latérales (7, 9) respectives agencées de manière opposée sont incurvés l'un vers l'autre,
**caractérisé en ce que** les bords de raccordement (7c, 9c) comprennent des ouvertures (31) de boulon et des ouvertures (33) d'accès.

2. Réservoir d'aquaculture (1) en matériau plastique renforcée par des fibres selon la revendication 1, **caractérisé en ce que** les plaques latérales (7, 9) comprennent en outre des brides de fixation (7i, 9i) qui sont agencées verticalement à l'opposé des bords de raccordement (7c, 9c) et qui s'étendent parallèlement à l'extension horizontale des poutres (5) de paroi, et dans lequel les brides de fixation (7i, 9i) des deux plaques latérales (7, 9) respectives agencées de manière opposée s'incurvent l'une vers l'autre.

3. Réservoir d'aquaculture (1) en matériau plastique renforcée par des fibres selon la revendication 1, **caractérisé en ce que** la bride de raccordement (7c, 9c) et la bride de fixation (7i, 9i) des plaques latérales (7, 9) respectives s'étendent selon une extension horizontale différente transversalement à la longueur longitudinale des plaques latérales, dans lequel une partie d'une bride de raccordement (7c, 9c) d'une plaque latérale (7, 9) chevauche une partie d'une bride de fixation (7i, 9i) d'une plaque latérale (7, 9) opposée et inférieure.

4. Réservoir d'aquaculture (1) en matériau plastique renforcée par des fibres selon la revendication 2, ou selon la revendication 3 et l'une quelconque de la revendication 4 et de la revendication 5, **caractérisé en ce que** les bords de raccordement (7c, 9c) et les brides de fixation (7i, 9i) comprennent un motif de fixation (41).

5. Réservoir d'aquaculture (1) en matériau plastique renforcée par des fibres selon la revendication 3, **caractérisé en ce que** les plaques latérales (7, 9) respectives comprennent une bride de raccordement (7c, 9c) et une bride de fixation (7i, 9i) qui comprennent chacune une fente de fixation (7j, 9j) respective qui reçoit conjointement un organe de fixation (39).

6. Réservoir d'aquaculture (1) en matériau plastique renforcée par des fibres selon l'une quelconque des revendications précédentes, **caractérisé en ce que** les bords de raccordement et/ou les brides de fixation (7i, 9i) comprennent une pluralité de saillies (35) et une pluralité d'évidements (37) de réception, dans lequel les saillies (35) s'étendent dans les évidements (37) de réception.

7. Réservoir d'aquaculture (1) en matériau plastique renforcée par des fibres selon la revendication 1, **caractérisé en ce que** ladite distance horizontale est une première distance horizontale (10), et **en ce que** les première et seconde plaques latérales (7, 9), respectivement, comprennent
- une partie de fixation verticale (7b, 9b), dans lequel une seconde distance horizontale (20) est présente entre les faces extérieures des parties de fixation verticales (7b, 9b) des première et seconde plaques latérales (7, 9), respectivement ;
dans lequel la première distance horizontale (10) est supérieure ou égale à la seconde distance horizontale (20),
dans lequel les parties de fixation verticales (7b, 9b) sont situées entre les parties de paroi verticales (7a, 9a),

8. Réservoir d'aquaculture (1) selon la revendication 1 ou la revendication 7, **caractérisé en ce que** la poutre (5) formant paroi comprend en outre une plaque de fixation (11), reliée aux deux plaques latérales opposées (7, 9) et **en ce que** la plaque de fixation (11) se raccorde auxdites bords de raccordement (7c, 9c).

9. Réservoir d'aquaculture (1) selon l'une des revendications précédentes, **caractérisé en ce que**, parmi les deux plaques latérales (7, 9) d'une poutre (5) formant paroi, la partie de paroi verticale (7a) d'une première plaque latérale (7) constitue une face de paroi interne du réservoir d'aquaculture (1), et la partie de paroi verticale (9a) d'une seconde plaque latérale (9) constitue une face de paroi interne d'un réservoir d'aquaculture adjacent (1).

10. Réservoir d'aquaculture (1) selon l'une des revendications 8 à 9, **caractérisé en ce que** la plaque de fixation (11) comprend trois branches (11a) s'étendant à partir d'une intersection (19) et dans des parois latérales séparées (3) de réservoirs d'aquaculture adjacents (1).

11. Réservoir d'aquaculture (1) selon l'une des revendications précédentes, **caractérisé en ce qu'**une ou plusieurs plaques latérales (7, 9) comprennent une partie de fixation sous forme d'une avancée en retrait (7d) sur une extrémité de la plaque latérale (7, 9), dans lequel l'avancée en retrait (7d) chevauche une extrémité d'une plaque latérale adjacente (7, 9) et s'y raccorde.

12. Réservoir d'aquaculture (1) selon l'une des revendications précédentes, **caractérisé en ce qu'**il comprend une plaque de fixation (11) qui raccorde la première plaque latérale (7) à la seconde plaque latérale (9), et un élément de contact (13) configuré pour buter contre une poutre (5) formant paroi adjacente, et **en ce que** la plaque de fixation (11) et l'élément de contact (13) sont un seul et même élément.

13. Réservoir d'aquaculture (1) selon l'une des revendications précédentes, **caractérisé en ce qu'**il comprend en outre un élément de serrage (21) configuré pour serrer les parties de fixation verticales (7b, 9b) de deux plaques latérales opposées (7, 9) vers l'extérieur contre des parties (7a, 9a) de paroi verticales orientées vers l'extérieur d'une poutre (5) formant paroi adjacente, dans lequel l'élément de serrage (21) est configuré pour être déplacé d'une position de non-serrage vers une position de serrage.
